Europäisches Patentamt

European Patent Office

Office européen des brevets

(11) Veröffentlichungsnummer: **0 317 791**
**A2**

## (12) EUROPÄISCHE PATENTANMELDUNG

(21) Anmeldenummer: 88118065.7

(22) Anmeldetag: 29.10.88

(51) Int. Cl.⁴: **B62D 1/18**

(30) Priorität: 24.11.87 DE 3739781

(43) Veröffentlichungstag der Anmeldung:
**31.05.89 Patentblatt 89/22**

(84) Benannte Vertragsstaaten:
**DE ES FR GB IT SE**

(71) Anmelder: **Lemförder Metallwaren AG
Postfach 1220
D-2844 Lemförde(DE)**

(72) Erfinder: **Reddehase, Günter
Antonstrasse 238
D-2844 Brockum(DE)**

(74) Vertreter: **Bruse, Willy Hans Heinrich
Edisonstrasse 14
D-2800 Bremen 33(DE)**

(54) **Sicherheitslenksäule für Kraftfahrzeuge.**

(57) Es wird eine Sicherheitslenksäule für Kraftfahrzeuge mit einer vorderen Knautschzone offenbart, die aus in Achsrichtung der Lenksäule teleskopisch ineinanderschiebbaren Teilen besteht, von denen das eine Teil (3) gegenüber der Karosserie (8) gegen axiale Verschiebung festgelegt ist und ein weiteres Teil (4) das Lenkrad (1) trägt, wobei dieses letztere Teil bei einem Crash in Richtung des ersteren Teils längsverschieblich geführt ist und mit dieser Bewegung das Lenkrad (1) aus dem Aufschlagbereich des Fahrers zurückzieht. Das gegenüber der Karosserie gegen axiale Verschiebung festgelegte Teil (3) und das das Lenkrad (1) tragende Teil (4) sind an einer Kolben-Zylinder-Einheit mit einer Druckmittelfüllung ausgebildet, wobei diese Kolben-Zylinder-Einheit in einer Strecklage eingebaut ist und sich bei Beaufschlagung durch Verschiebung eines im Bereich der Knautschzone liegenden unteren Wellenteiles (2) in der Länge verkürzt.

FIG. 1

Xerox Copy Centre

## Sicherheitslenksäule für Kraftfahrzeuge

Die Erfindung betrifft eine Sicherheitslenksäule für Kraftfahrzeuge mit einer vorderen Knautschzone, welche die Merkmale des Gattungsbegriffes nach dem Patentanspruch 1 aufweist.

Aus der DE-OS 25 48 022 ist eine derartige Sicherheitslenksäule bekannt. Dabei ist das eine Wellenteil der Lenkwelle in einem an der Karosserie festen Gehäuse beweglich, welches eine Druckmittelkammer bildet, in die ein Druckmittel in Abhängigkeit von der Bewegung einer auf den von der Stoßstange des Fahrzeuges abgegebenen Druck ansprechende Vorrichtung zur Verschiebung des mit dem Lenkrad verbundenen Lenkwellenteiles vom Fahrer weg einströmt. Das Druckmittel wird durch den Kolben einer Kolben-Zylinder-Einheit aus deren Zylinder verdrängt, wobei diese Kolben-Zylinder-Einheit im Bereich der Stoßstange des Fahrzeuges neben der Lenkwelle angeordnet ist. Die Teile der Lenkwelle sind außerdem durch einen Scherstift gegen axiale Verschiebung gesichert, so daß eine zum Bruch des Scherstiftes führende Stoßenergie vorhanden sein muß, um diese Sicherheitsvorrichtung in Funktion zu setzen.

Bei einer anderen bekannten Ausbildung nach der DE-OS 35 44 345 ist der obere Teil einer Lenkwelle, der das Lenkrad trägt, bei einem Crash mit Energie aus einem außerhalb der Lenksäule angeordneten, vorgespannten Energiespeicher, z.B. einer Kolben-Zylinder-Einheit mit einer Füllung aus komprimiertem Gas, nach unten teleskopisch gegenüber einem weiteren Wellenteil verschiebbar, so daß das Lenkrad mit dem oberen Teil der Lenksäule vom Fahrer weg bewegt und gleichzeitig Momente erzeugt werden, die die Lenksäule um eine definierte Schwenkachse seitlich verschwenken. Für die Freisetzung der Energie aus dem Speicher sind empfindliche Sensoren und Regelorgane vorgesehen, die die Arretierung des Energiespeichers überwinden.

Aufgabe der Erfindung ist die Gestaltung einer Sicherheitslenksäule, bei der im Crashfall eine Verkürzung der Lenkwelle mit einer Entfernung des Lenkrades vom Fahrzeuglenker ohne Sollbruchstellen, Sensoren und Regelorgane erfolgt, wenn Stoßenergie unmittelbar auf das untere Ende der Lenkwelle wirksam wird.

Zur Lösung der gestellten Aufgabe ist erfindungsgemäß eine Ausbildung der eingangs genannten Sicherheitslenksäule mit den Merkmalen nach dem Kennzeichen des Patentanspruches 1 vorgesehen.

Diese Merkmale realisieren den Erfindungsgedanken, im Crashfalle die axial auf die Lenksäule unmittelbar einwirkende Verformungsenergie aus dem Bereich der Knautschzone durch Teile der Lenkwelle auf die Kolben-Zylinder-Einheit in der Sicherheitslenksäule zu übertragen und zum Wegziehen des Lenkrades aus dem Aufschlagbereich des Fahrzeuglenkers zu nutzen. Die zweifach teleskopische Lenkwelle mit sich von unten nach oben ineinanderschiebenden Wellenteilen bildet zwei Kolben-Zylinder-Einheiten, deren Zylinderräume miteinander verbunden sind. Das untere Wellenteil ragt in die Knautschzone des Fahrzeugs unmittelbar hinein, so daß es im Crashfalle durch die axial auf die Lenkwelle wirksame Stoßenergie nach oben in den mittleren, an der Karosserie festgelegten Wellenteil, hineingeschoben wird. Dabei wird das Druckmittel aus dem Innenraum dieses mittleren Wellenteiles in einen Zylinderraum verdrängt, in welchem eine Kolbenfläche in entgegengesetzter Richtung - das heißt also nach unten - beaufschlagt wird, die eine feste Verbindung mit dem oberen, das Lenkrad tragenden Wellenteil, aufweist, so daß das Lenkrad bei entsprechender Beaufschlagung aus dem Aufprallbereich des Fahrzeuglenkers weggezogen wird. Als Druckmedium sind in an sich bekannter Weise Flüssigkeiten geeignet. Eine teleskopierbare Lenkwelle mit den zuvor genannten Merkmalen ist im allgemeinen in einem Mantelrohr angeordnet, welches ebenfalls aus teleskopierbaren Teilen besteht oder derart dünne Wandungen aufweist, daß es im Crashfalle mit geringem Energieaufwand verformt wird.

Zur näheren Erläuterung der Erfindung ist auf der Zeichnung ein Ausführungsbeispiel dargestellt. Es zeigen:

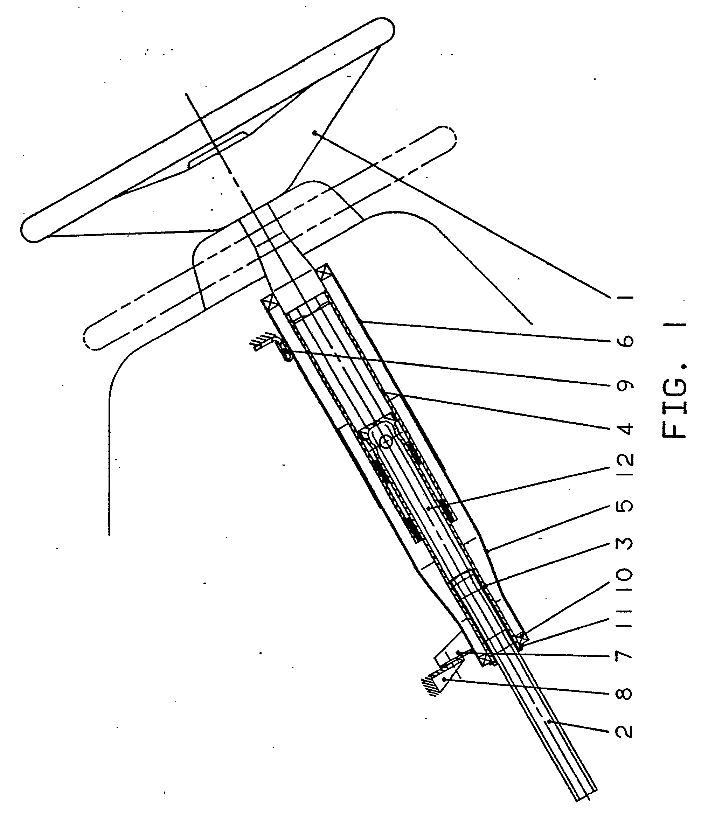

Figur 1 einen vertikalen Schnitt durch eine Lenksäule mit einer teleskopierbaren Lenkwelle und einem diese umgebenden, ebenfalls teleskopierbaren Mantelrohr,

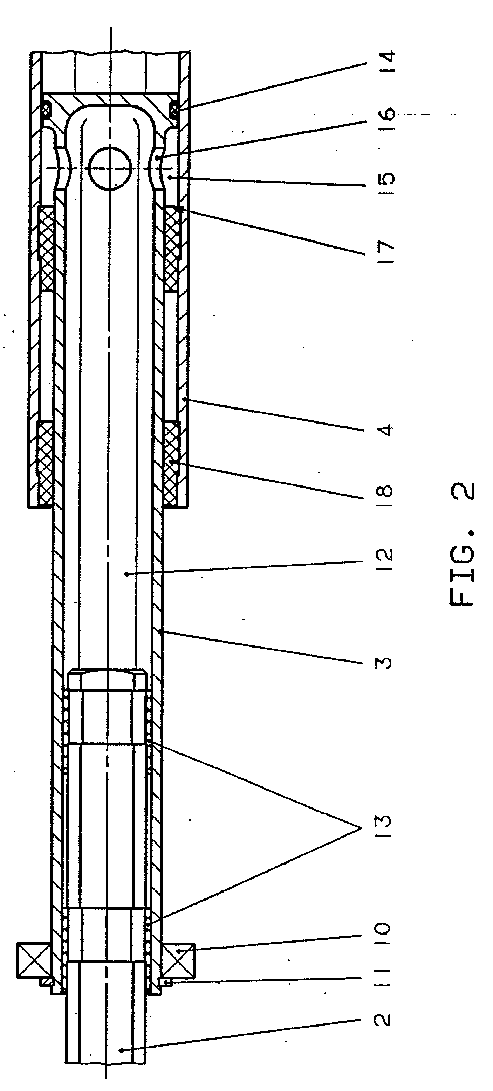

Figur 2 einen gegenüber Figur 1 im Maßstab vergrößerten Längsschnitt eines Teilbereiches der Lenkwelle und

Figur 3 einen Längsschnitt entsprechend Figur 2 einer konstruktiv verändert ausgebildeten Lenkwelle.

Figur 4 einen Längsschnitt durch eine Lenksäule mit einer Ausbildung der Erfindungsmerkmale an dem die Lenkwelle umgebenden Mantelrohr,

Figur 5 eine Darstellung entsprechend Figur 4 nach erfolgter Längenreduzierung,

Figur 6 einen Längsschnitt durch eine Ausführungsform mit einem zusätzlichen Energiespeicher und

Figur 7 einen Längsschnitt einer Ausbildungsvariante mit einem extern angeordneten zusätzlichen Energietransformator.

Nach dem Ausführungsbeispiel ist das Lenkrad 1 auf dem oberen Ende einer mehrfach teleskopischen Lenkwelle angeordnet. Die Lenkwelle besteht aus dem unteren Lenkwellenteil 2, dem mittleren Lenkwellenteil 3 und dem oberen Lenkwellenteil 4, welches das Lenkrad 1 trägt. Diese mehrfach teleskopische Lenkwelle ist innerhalb eines Mantelrohres angeordnet, welches im Gegensatz zur Lenkwelle nur einfach teleskopisch ausgebildet ist und aus einem unteren Mantelrohrteil 5 sowie einem oberen Mantelrohrteil 6 besteht. Das untere Mantelrohrteil 5 ist mittels eines Halters 7 an einem Teil 8 der Karosserie, insbesondere an der verformungssteif gestalteten Fahrgastzelle, befestigt. Die Abstützung 9 des oberen Mantelrohrteiles 6 an der Karosserie, z.B. am Armaturenbrett, ist so gestaltet, daß sie sich bei axialer Verschiebung des oberen Mantelrohrteiles 6 selbsttätig löst.

Das mittlere Wellenteil 3 der Lenkwelle ist in einem Lager 10 innerhalb des unteren Mantelrohrteiles 5 drehbar, jedoch in axialer Richtung unverschiebbar gelagert. Zur Sicherung gegen Axialverschiebung dieses mittleren Wellenteiles 3 nach oben ist ein Sicherungsring 11 unterhalb des Lagers 10 vorgesehen. Das untere Wellenteil 2 greift mit seinem als Kolben gestalteten oberen Ende von unten her in den hohlen mittleren Wellenteil 3 ein, der als Zylinder 12 ausgebildet und mit einem Druckmedium, z.B. mit Drucköl, gefüllt ist. Eine sichere Abdichtung des kolbenförmigen oberen Endes des unteren Wellenteiles 2 gegenüber der inneren Zylinderfläche des mittleren Wellenteiles 3 wird durch zwei Kolbendichtungen 13 hintereinander erreicht, wobei diesen Kolbendichtungen außerdem die Aufgabe zugeordnet ist, genau vorbestimmte Losbrechkräfte zu übernehmen. Das obere Ende des mittleren Wellenteiles 3 greift von unten her in das zylinderförmig gestaltete untere Ende des oberen Wellenteiles 4 ein und ist an seinem freien Ende mit einer Abdichtung 14 versehen. Dieses obere Wellenteil 4 umgibt das mittlere Wellenteil 3 mit Abstand, so daß ein Zylinderraum 15 gebildet wird, der über Wandungsdurchbrechungen 16 des mittleren Wellenteiles 3 mit dem Innenraum des Zylinders 12 verbunden ist. Innerhalb des oberen Wellenteiles 4 ist ein Kolben 17 vorgesehen, der aus dem Zylinderraum 15 heraus in Richtung zum mittleren Wellenteil 3 nach unten beaufschlagbar ist. Ein weiterer Kolben 18 mit entsprechender Dichtung dient zur sicheren Führung des oberen Wellenteiles 4 auf dem Außenmantel des mittleren Wellenteiles 3 in Verbindung mit der genauen Definierung der weiter oben schon erwähnten Losbrechkräfte. Im Crashfalle wird das untere Wellenteil 2 nach oben in das gegenüber der Karosserie festgelegte mittlere Wellenteil 3 hineingeschoben. Dadurch wird das im Innenraum des Zylinders 12 befindliche Druckmedium über die Wandungsdurchbrechungen 16 in den Zylinderraum 15 verdrängt und beaufschlagt hier die Ringkolbenfläche 17, so daß das obere Wellenteil 4 nach unten weggedrückt und somit das Lenkrad aus dem Aufschlagbereich des Fahrzeuglenkers zurückzieht.

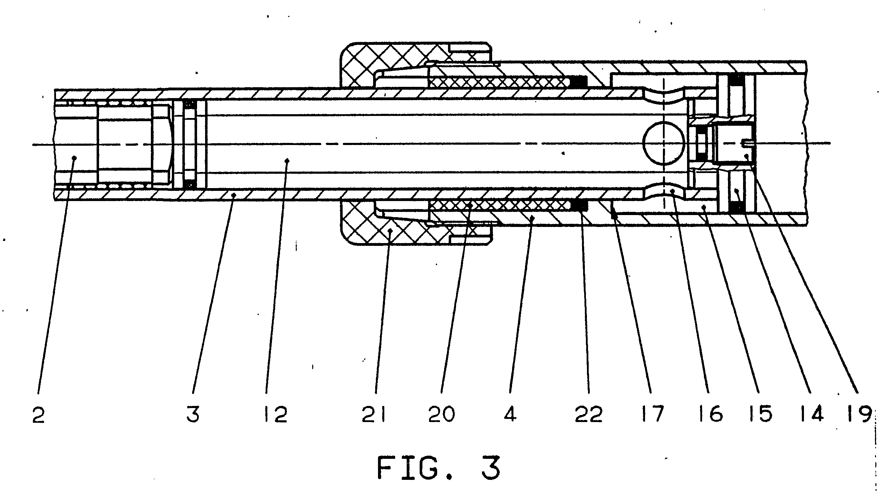

Die Figur 3 zeigt in einer konstruktiv weiter ausgebildeten Darstellung die Anordnung einer Füllschraube 19 im Boden des mittleren Wellenteiles 3 im Bereich des dort vorgesehenen Dichtungskolbens 14. Diese Schraube ermöglicht das Einbringen des Druckmediums in den Innenraum des Zylinders 12 von oben her durch das obere Wellenteil 4 bei abgenommenem Lenkrad. Außerdem ist in dem Beispiel der Figur 3 eine Führung des oberen Wellenteiles 4 auf dem gegenüber der Karosserie gegen axiale Verschiebung festgelegten mittleren Wellenteil dargestellt, bei der das Drehmoment zwischen den beiden Wellenteilen 3 und 4 durch eine auf größerer Länge vorgesehene Kunststoffbuchse 20 nach Art einer Stopfbüchse mit einer auf einem Außengewinde am unteren Ende des oberen Wellenteiles 4 verschraubbaren Kappe 21 erfolgt. Diese Kunststoffbüchse ist an zwei Umfangsflächen abgeflacht, so daß durch die verschraubbare Kappe 21 vorbestimmte Losbrechkräfte eingestellt werden können. Die Abdichtung erfolgt durch den Dichtungsring 22.

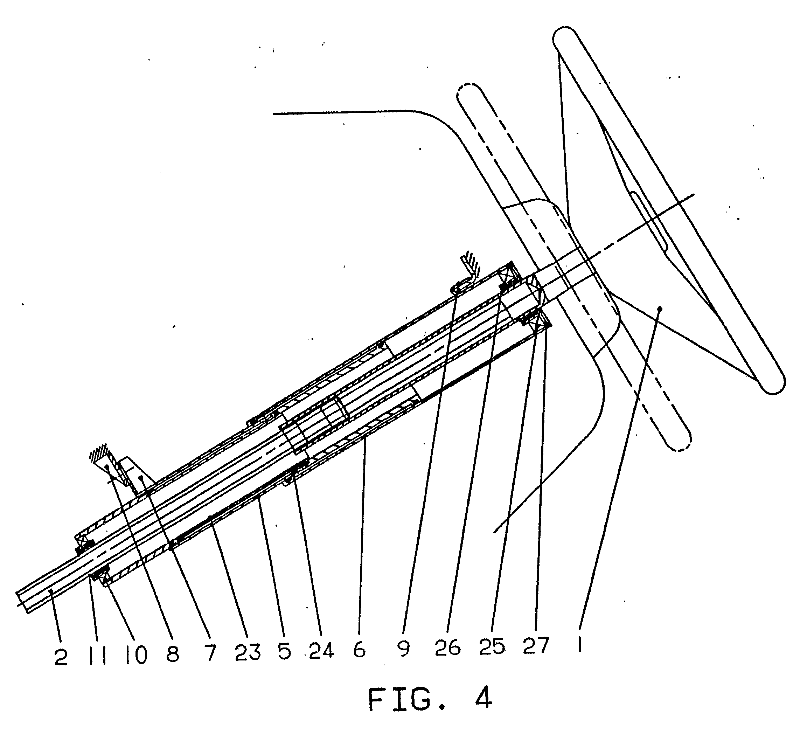

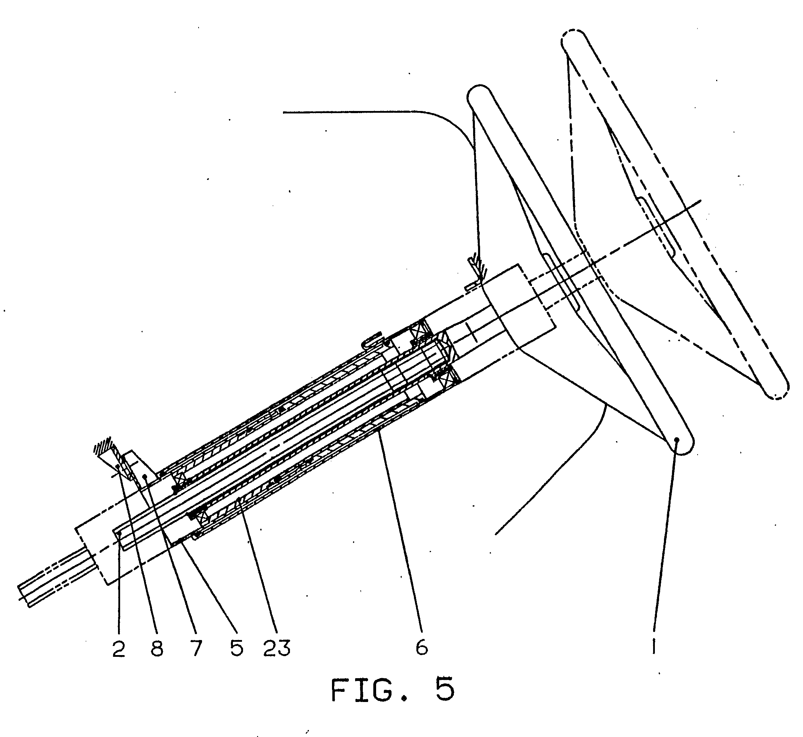

Die Figur 4 zeigt schematisiert eine Lenksäule, die sich ebenfalls bei einem Stoß auf die Lenkwelle in der Länge reduziert. Die Erfindungsmerkmale sind jedoch an dem die Lenkwelle umgebenden Mantelrohr ausgebildet. Durch die Aufprallkräfte wird die Lenkwelle 2 in Richtung zum Lenkrad verschoben. Über einen Sicherungsring 11 und die Lagereinheit 12 wird ein inneres Mantelrohr 23 zusammen mit der Lenkwelle 4 verschoben. Ein mittleres Mantelrohr 5 stützt sich mit dem an ihm befestigten Flansch 7 an der Karosserie 8 ab und bleibt somit ortsfest, weil dieser Teil der Karosserie nur unwesentlich verformt wird. Durch die Relativbewegung zwischen dem inneren Mantelrohr 23 und dem mittleren Mantelrohr 5 wird schlagartig ein Druck in dem Kammerraum 24 durch die hydraulische Flüssigkeit aufgebaut. Dieser Druck wirkt auf das äußere Mantelrohr 6 und bewegt dieses zusammen mit dem Lenkrad 1 über die Lagereinheit 25 und die Sicherungsringe 26 bzw. 27 in Richtung Armaturenbrett. Die Figur 5 zeigt die auf diese Weise zusammengeschobene Stellung der Lenksäule.

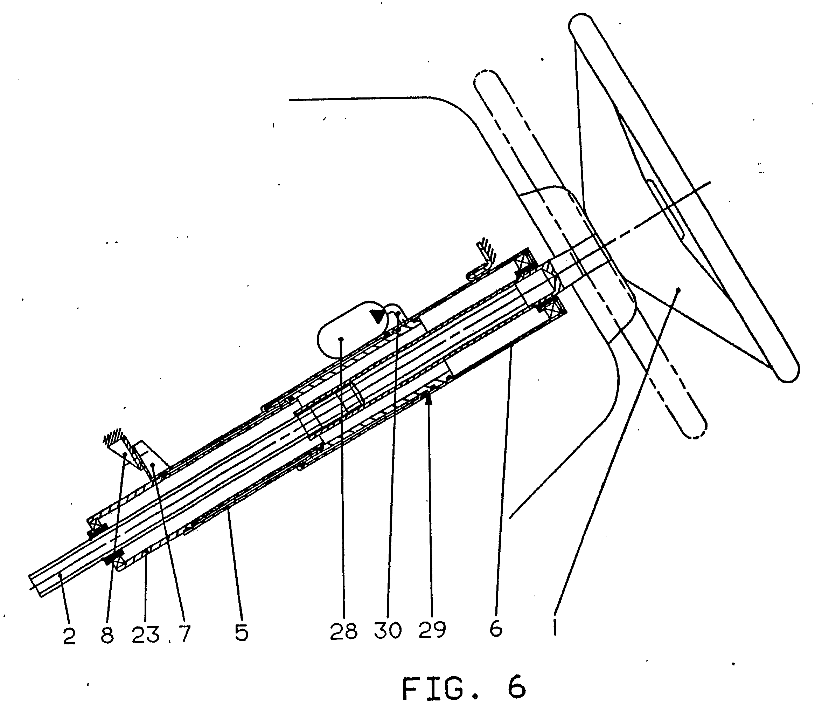

Die Figur 6 zeigt einen zusätzlichen Energiespeicher 28, welcher im Crashfalle Energie aus einer unter Vorspannung stehenden Flüssigkeit zur Verfügung stellt. Wenn sich das äußere Mantelrohr 6 in Richtung zum Motorenraum des Fahrzeugs bewegt, entsteht ein weiterer Kammerraum 29,, der über die Leitung 30 mit der Flüssigkeit aus dem hydraulischen Energiespeicher 28 beaufschlagt wird und zusammen mit dem Druck in dem Kammerraum 24 ein Zurückziehen des Lenkrades 1 in Richtung zum Armaturenbrett bewirkt. Das schnelle Zurückziehen des Lenkrades vom Körper des Fahrzeuglenkers wird dadurch erheblich begünstigt.

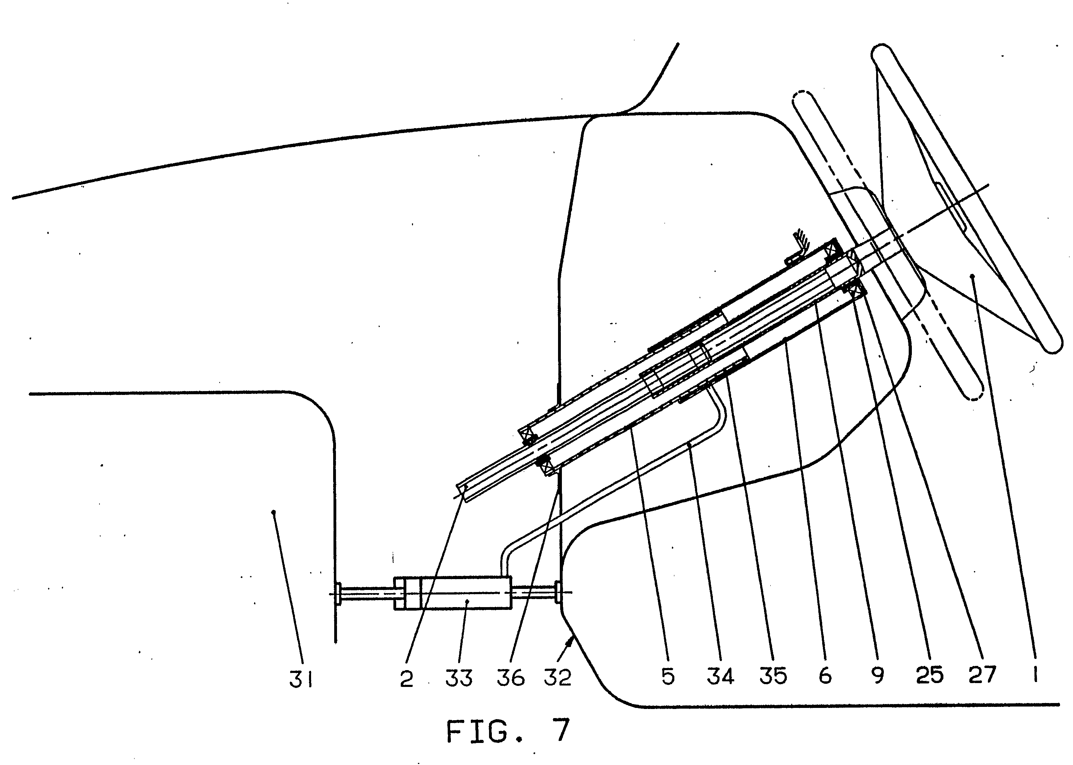

In der Figur 7 ist schließlich ein Ausführungsbeispiel für die Erfindungsmerkmale mit einem extern angeordneten zusätzlichen Energietransformator dargestellt. Der Energietransformator besteht aus einer hydraulischen Kolben-Zylinder-Einheit 33, die zwischen dem Motorblock 31 und der Spritzwand 32 an geeigneter Stelle angeordnet ist. Bei einen Crash wird der Abstand zwischen dem Motorblock 31 und der Spritzwand 32 verkleinert, so daß sich in der Kolben-Zylinder-Einheit 33 ein Druck aufbaut, der über die Leitung 34 in den Kammerraum 35 zwischen den beiden Mantelrohrteilen 5 und 6 geleitet wird und die Ringkolbenfläche in diesem Kammerraum beaufschlagt. Dadurch wird das obere (äußere) Mantelrohr 6 mit der Lagereinheit 25 und dem Sicherungsring 23 zusammen mit dem Lenkrad 1 vom Fahrzeuglenker weggezogen. Das untere (innere) Mantelrohr 5 bleibt in der gleichen Position, weil es mit dem Flansch 36 an der steifen Fahrgastzelle der Karosserie befestigt ist. Die Lenkwelle 2 kann wie bei herkömmlichen Schiebe systemen eingeschoben werden wenn große Kräfte auf sie einwirken.

**Ansprüche**

1. Sicherheitslenksäule für Kraftfahrzeuge mit einer vorderen Knautschzone, bei der die Lenkwelle aus in Achsrichtung der Lenksäule teleskopisch ineinanderschiebbaren Teilen besteht, von denen ein gegenüber der Karosserie (8) gegen axiale Verschiebung festgelegtes Wellenteil (3) und ein das Lenkrad (1) abstützendes Wellenteil (4) an einer Kolben-Zylinder-Einheit mit Druckmittelfüllung ausgebildet sind, die in einer Strecklage eingebaut ist und sich bei Beaufschlagung durch Verschiebung eines im Bereich der Knautschzone angeordneten Baugliedes (2, 33) in der Länge verkürzt, dadurch gekennzeichnet, daß die Lenkwelle zweifach teleskopisch mit sich von unten nach oben ineinanderschiebenden Wellenteilen (2,3,4) und mit zwei Kolben-Zylinder-Einheiten ausgebildet ist, deren Zylinderräume (12,15) miteinander verbunden sind, wobei das untere Wellenteil (2) der Lenkwelle das die Beaufschlagung der Kolben-Zylinder-Einheit bewirkende Bauteil bildet.

2. Sicherheitslenksäule nach Anspruch 1, dadurch gekennzeichnet, daß die Lenkwelle
-ein unteres Wellenteil (2) mit einer Kolbenausbildung an seinem oberen Ende,
-ein mittleres, gegenüber der Karosserie (8) gegen axiale Verschiebung festgelegtes Wellenteil (3) mit einer komplementären Zylinderausbildung (12) an seinem unteren Ende und mit Flüssigkeitsfüllung sowie
-ein oberes, das Lenkrad (1) abstützendes Wellenteil (4) aufweist, welches mit einer weiteren Zylinderausbildung (15) auf das komplementär dazu gestaltete obere Ende des mittleren Wellenteiles (3) sowie auf eine an diesem ausgebildete Kolbendichtung (14) aufgesetzt ist,
-wobei dieses obere Wellenteil (4) zusammen mit dem mittleren Wellenteil (3) einen weiteren Zylinderraum (15) einschließt und mit dem Ringkolben (17) auf dem Außenmantel des mittleren Wellenteils (3) geführt ist.

3. Sicherheitslenksäule mit einer Lenkwelle aus rohrförmigen Wellenteilen nach den Ansprüchen 1 und 2, dadurch gekennzeichnet, daß der Boden des mittleren Wellenteils (3) eine mittels einer Verschlußschraube (19) mit einer Dichtung verschlossene Öffnung aufweist.

4. Sicherheitslenksäule nach den Ansprüchen 1 bis 3, dadurch gekennzeichnet, daß die Drehmomentübertragung zwischen dem unteren Ende des oberen Wellenteiles (4) und dem mittleren Wellenteil (3) durch eine zwischen beiden eingesetzte Kunststoffbüchse (20) erfolgt, die an zwei Umfangsflächenbereichen abgeflacht und durch eine auf das untere Ende des Wellenteiles (4) aufschraubbare Kappe (21) vorspannbar ist.

5. Sicherheitslenksäule nach den Ansprüchen 1 bis 4, dadurch gekennzeichnet, daß die Lenkwelle in einem Mantelrohr (5,6) aus entsprechend teleskopierbaren Mantelrohrteilen angeordnet und der mittlere Wellenteil (3) der Lenkwelle mit dem karosseriefesten Abschnitt des Mantelrohres drehbar, jedoch axial unverschieblich, verbunden ist.

FIG. 1

2  8  7  11 10  3  5  12  4  9  6  1

EP 0 317 791 A2

FIG. 2

FIG. 3

FIG. 4

2  11  10  8  7  23  5  24  6  9  26  25  27  1

EP 0 317 791 A2

FIG. 5

FIG. 6

FIG. 7